# FASCICULE DE BREVET EUROPEEN

(11) **EP 0 511 908 B1**
(45) Date de publication et mention de la délivrance du brevet: **13.09.1995**
(21) Numéro de dépôt: 92401201.6
(22) Date de dépôt: 27.04.1992
(51) Int. Cl.: H02G 1/02

(54) **Procédé d'intervention sur des câbles aériens au moyen d'une nacelle et d'une fourche héliportées**
Eingriffsverfahren zum Ausführen von Arbeiten an Freileitungen mit einem Hubschrauber-getragenen Arbeitskorb und Gabel
Intervention process for working at power lines with a helicopter-carried worksbasket and fork

(30) Priorité: 29.04.1991 FR 9105255
(43) Date de publication de la demande: 04.11.1992
(73) Titulaire: ELECTRICITE DE FRANCE Service National, 75008 Paris (FR)
(72) Inventeur: De Forges de Parny, Robert, F-13950 Cadolive (FR); Moudin, Gérard, F-73200 Albertville (FR); Ruaux, Philippe, F-13340 Rognac (FR)
(74) Mandataire: Signore, Robert

(56) Documents cités:
- US-A- 3 863 736
- US-A- 4 478 312

## Description

### DOMAINE DE L'INVENTION

L'invention concerne l'entretien et la réparation des câbles aériens, tels que des câbles électriques du réseau public de distribution de l'électricité. L'invention est particulièrement adaptée aux changements de manchons de jonction entre deux tronçons d'un câble aérien. L'invention peut également s'appliquer à des câbles de moyens de transport, tels que les téléphériques et toutes les cabines portées par des câbles et pouvant supporter le poids supplémentaire d'une nacelle d'entretien. L'invention concerne également indirectement l'héliportage.

### ART ANTERIEUR

La plupart des câbles aériens nécessitent, une fois qu'ils sont installés, de nombreuses opérations d'entretien, de réparation et d'aménagement. En effet, dans le cadre des programmes d'entretien et d'aménagement du réseau public de distribution de l'énergie électrique, l'Electricité de France doit assurer de nombreuses interventions diverses. Par exemple, le remplacement d'un manchon de jonction entre deux tronçons d'un câble aérien nécessité la pose au sol de ce câble, de manière à effectuer les réparations, et nécessité ensuite la remise en place du câble, suspendu entre deux pylônes. Ce type d'intervention est extrêmement long et coûteux.

L'invention vise à faciliter, à améliorer et à accélérer ce type d'opération sur n'importe quel câble aérien.

D'autre part, par le brevet américain US-A-4 478 312, on connaît une nacelle héliportée pour l'entretien des lignes à haute tension. Cette nacelle comprend deux parties dans chacune desquelles un opérateur peut être embarqué. Elle comprend des moyens d'ancrage à une pièce de sustensation et des moyens de guidage sur des câbles, en l'occurrence des patins de guidage.

Cette nacelle est bien entendu héliportée et fixée sur des câbles haute tension pour l'entretien de ceux-ci. Par contre, elle est suspendue par l'intermédiaire d'un filin et d'un crochet de hissage.

### RESUME DE L'INVENTION

A cet effet, un premier objet de l'invention est un procédé d'intervention sur au moins un câble aérien au moyen d'une nacelle à bord de laquelle peuvent être embarqués du matériel et des opérateurs et comprenant des moyens de fixation de la nacelle aux câbles. Selon l'invention, le procédé consiste à :
- fixer la nacelle à un élément porteur en forme de fourche, de manière à pouvoir saisir la nacelle sur le côté et légèrement par en dessous ;
- suspendre l'élément porteur à un hélicoptère ;
- héliporter l'ensemble de l'élément porteur et de la nacelle pour positionner la nacelle sur au moins deux câbles aériens ;
- fixer la nacelle sur au moins un desdits câbles aériens ;
- détacher et retirer l'élément porteur de la nacelle.

Une équipe d'opérateurs peut ainsi évoluer pendant un certain temps sur un ou plusieurs câbles, alors que l'hélicoptère porteur est parti pour effectuer d'autres tâches. Pour compléter ce procédé, selon l'invention on prévoit également l'enlèvement de la nacelle qui est placée sur les câbles par un procédé comprenant les étapes suivantes :
- suspendre un élément porteur à un hélicoptère ;
- positionner par héliportage l'élément porteur en forme de fourche près de la nacelle posée sur les câbles à côté d'elle ;
- fixer la nacelle à l'élément porteur ;
- détacher la nacelle des câbles ;
- dégager la nacelle des câbles ;
- ramener au sol par héliportage l'ensemble constitué de la nacelle et de l'élément porteur.

Un deuxième objet principal de l'invention est donc une nacelle héliportée, constituée d'une structure métallique à l'intérieur de laquelle peuvent être embarqués des opérateurs et du matériel, la nacelle comprenant des moyens de fixation à au moins un câble aérien pour pouvoir fixer la nacelle à ce câble aérien,
caractérisée en ce qu'elle comprend deux parois latérales d'extrémité à l'extérieur desquelles sont placés les moyens de fixation à un élément porteur en forme de fourche qui peut être suspendu à un hélicoptère, ces moyens de fixation à l'élément porteur permettant de recevoir chacun une extrémité de préhension de l'élément porteur en forme de fourche.

Dans ce cas, des moyens de fixation à l'élément porteur sont constitués d'un crochet orienté vers le bas, et en dessous duquel peut pénétrer une extrémité de préhension de l'élément porteur.

Il est préférable de prévoir des moyens de verrouillage de chacune des extrémités de préhension dans le crochet correspondant.

Dans ce cas, ces moyens de verrouillage peuvent être réalisés par une goupille traversant l'extrémité de préhension et au moins le crochet ou la paroi latérale d'extrémité.

La réalisation préférentielle des moyens de fixation de la nacelle aux câbles se fait par des barres de fixation dans lesquelles sont pratiquées des encoches ouvertes vers le bas quand les barres sont fixées sur les parties supérieures des parois latérales d'extrémité et dont la forme et la position correspondent à la forme et à la position respective des câbles.

Des moyens de verrouillage sur la nacelle de ces barres de fixation sont prévus pour assurer la fixation permanente de la nacelle sur les câbles, les encoches étant orientées vers le bas.

Un troisième objet de l'invention est une fourche héliportée constituant l'élément porteur du procédé précédemment décrit. Il comprend :
- des moyens d'arrimage aux élingues d'un filin d'un hélicoptère ;
- au moins deux extrémités de préhension s'étendant horizontalement et latéralement lorsque la fourche est suspendue, pour pouvoir pénétrer dans les moyens de fixation correspondants d'un objet à saisir et à héliporter. Cette fourche s'applique particulièrement dans le cadre de la nacelle précédemment résumée et comprenant des moyens de fixation verrouillables à l'aide de la goupille. Dans ce cas, la fourche possède des trous dans les extrémités de préhension pour permettre auxdites goupilles de pénétrer.

Les normes de sécurité imposent que dans ce cas la fourche soit constituée d'une structure métallique reliée à une barre supérieure par plusieurs boulons pyrotechniques reliés par des cordeaux pyrotechniques à des moyens de commande destinés à être actionnés à partir de l'hélicoptère ou par les opérateurs, pour larguer la structure métallique et le matériel embarqué en cas de force majeure, et comprenant des moyens d'arrimage des opérateurs à la barre supérieure.

### LISTE DES FIGURES

La description détaillée de l'invention, donnée à titre explicatif, est accompagnée des figures représentant respectivement :
- figure 1, l'application préférentielle de l'invention à des câbles électriques ;
- figure 2, la nacelle et la fourche selon l'invention ;
- figure 3, l'utilisation de moyens pyrotechniques pour larguer la structure métallique de la fourche selon l'invention ;
- figure 4, en vue frontale, les moyens de fixation de la fourche à la nacelle ;
- figures 5A et 5B, deux exemples de réalisation de barres de verrouillage utilisées sur la nacelle selon l'invention pour fixer celle-ci aux câbles aériens.

### DESCRIPTION DETAILLEE D'UN MODE DE REALISATION DE L'INVENTION

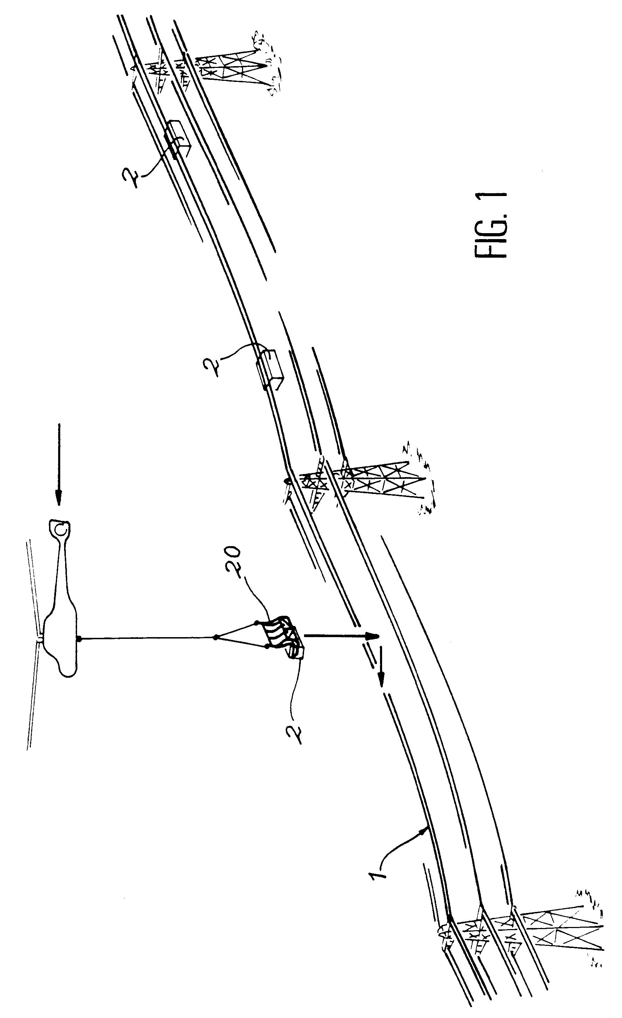

La figure 1 permet de comprendre facilement l'utilité du procédé d'intervention selon l'invention. En effet, on distingue sur cette figure 1, un réseau de câbles aériens 1, une nacelle 2 suspendue à un hélicoptère au moyen d'une fourche 20. D'autres nacelles 2 sont placées sur les câbles aériens 1. Elles sont destinées à placer une équipe d'opérateurs juste à côté d'un ou de plusieurs câbles aériens 1 en vue d'effectuer des opérations d'entretien ou de réparation de ces câbles. On comprend que, à l'aide d'un hélicoptère, il est facile de déposer plusieurs nacelles 2 pour que des opérations d'une durée de l'ordre d'une ou de deux dizaines de minutes soient effectuées sur les câbles aériens, avec la possibilité de venir les rechercher aussitôt que l'opération est terminée.

Les phases du procédé d'intervention, selon l'invention, sur de tels câbles aériens sont les suivantes :
- fixer une nacelle 2 à un élément porteur 20 qui doit être suspendu à un hélicoptère. Comme le montrent les figures, cet élément porteur est de préférence une structure métallique en forme de fourche qui peut venir saisir la nacelle 2. On signale que la nacelle 2 est destinée à embarquer une équipe d'opérateurs et leur matériel, dans le but d'effectuer une réparation ou une opération d'entretien sur un ou plusieurs câbles aériens 1. On signale également que la présente invention est plus particulièrement adaptée à l'entretien et la réparation d'un ou de plusieurs câbles d'un faisceau de câbles aériens 1, comme le montre la figure 1 ;
- suspendre l'élément porteur 20, en l'occurrence la fourche, à un hélicoptère porteur, au moyen duquel la mission de réparation doit être effectuée ;
- héliporter l'ensemble constitué de la nacelle 2 et de son élément porteur 20 sur les lieux de la réparation, en l'occurrence un ou plusieurs câbles aériens 1 ;
- positionner la nacelle 2 sur les câbles 1, à l'endroit où l'opération doit être effectuée (on signale la possibilité de fixer la nacelle sur un seul câble aérien 1, avec toutefois des risques d'instabilité de la nacelle) ;
- fixer de manière sûre et stable la nacelle 2 sur les câbles 1, de manière à ce que les opérateurs puissent évoluer en toute sécurité lors de l'opération à effectuer ;
- détacher de la nacelle 2 l'élément porteur constitué de préférence de la fourche 20 ; et évacuer la fourche 20 de la nacelle. Cette dernière opération permet à l'hélicoptère de manipuler une ou plusieurs autres nacelles 2 à l'aide de la fourche 20, pendant que la nacelle 2 qui vient d'être positionnée sur les câbles aériens 1 est opérationnelle pour effectuer l'opération d'entretien sur un ou plusieurs câbles.

Il est ainsi possible d'embarquer rapidement une équipe d'opérateurs, pour effectuer par exemple une opération consistant à changer un manchon de jonction entre deux parties d'un même câble aérien 1. Une telle opération peut être effectuée à l'aide d'un vérin de reprise d'efforts embarqué à bord de la nacelle 2. Il sert à maintenir la tension entre les deux parties du câble 1 à réparer et sur lequel la nacelle 2 est en partie positionnée, pendant l'opération de changement du joint de jonction.

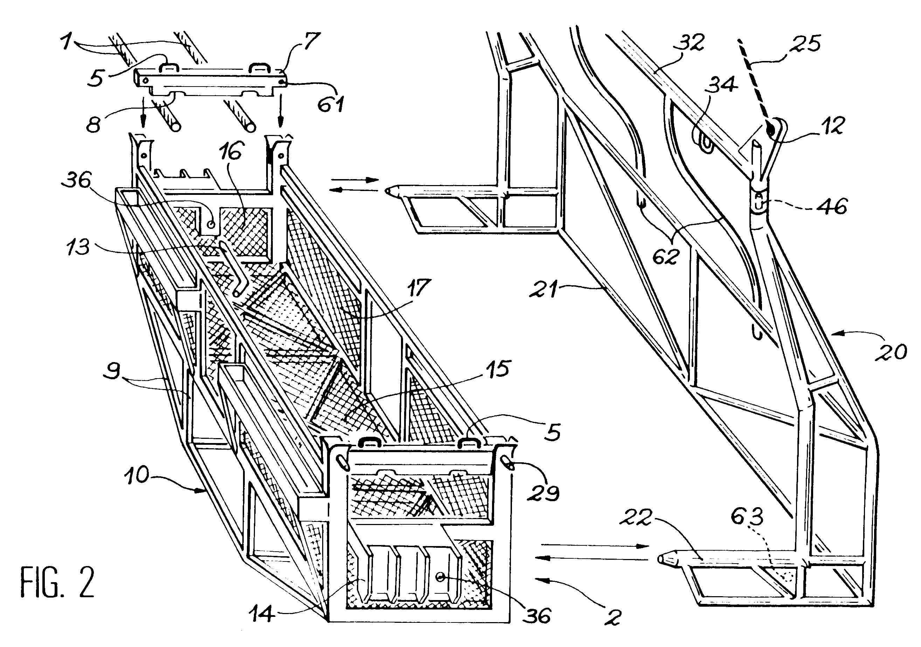

Le procédé selon l'invention se complète bien entendu par l'évacuation de la nacelle 2 des câbles 1. Cette évacuation est effectuée par héliportage, et plus exactement, par les phases suivantes :
- héliportage d'un élément porteur, tel que la fourche 20 ;
- positionnement de la fourche 20 avec ces éléments de préhension prêts à coopérer avec des éléments de fixation correspondants de la nacelle 2. La figure 1 ne donne pas d'idée précise sur ce positionnement, par contre, la figure 2 montre que dans la réalisation préférentielle de la fourche, des extrémités de préhension 22 sont prévues pour venir s'emmancher dans des moyens de fixation 14 de la nacelle 2 ;
- fixation de la nacelle 2 sur la fourche 20, de préférence par verrouillage des extrémités de préhension 22 dans les moyens de fixation 14 ;
- déverrouillage de la nacelle 2 par rapport aux câbles 1 sur lesquels elle est positionnée ;
- dégagement de la nacelle 2 par rapport aux câbles 1 au moyen de l'hélicoptère par un dégagement latéral en dessous des câbles 1, dans le cas de la figure 2 ;
- convoyage au sol de l'ensemble de la nacelle 2 et de la fourche 20.

Les détails du procédé seront précisés par la suite, lors de la description des principaux éléments permettant de réaliser ces interventions sur les câbles 1.

### Nacelle :

Pour la description de cette dernière, il faut se reporter à la partie gauche de la figure 2. Celle-ci est constituée d'une structure métallique 10 au moyen de cornières et de montants, de manière à délimiter un volume constituant un champ d'opérations pour une équipe d'opérateurs. Elle comprend principalement un plancher 15 et des parois latérales 16 et 17 qui sont soit en treillis métallique, soit en tôle. Le bac formé par le plancher 15 et les parois latérales 16 et 17 peut être rigidifié sur sa longueur par des barres inférieures 9 placées en système triangulé.

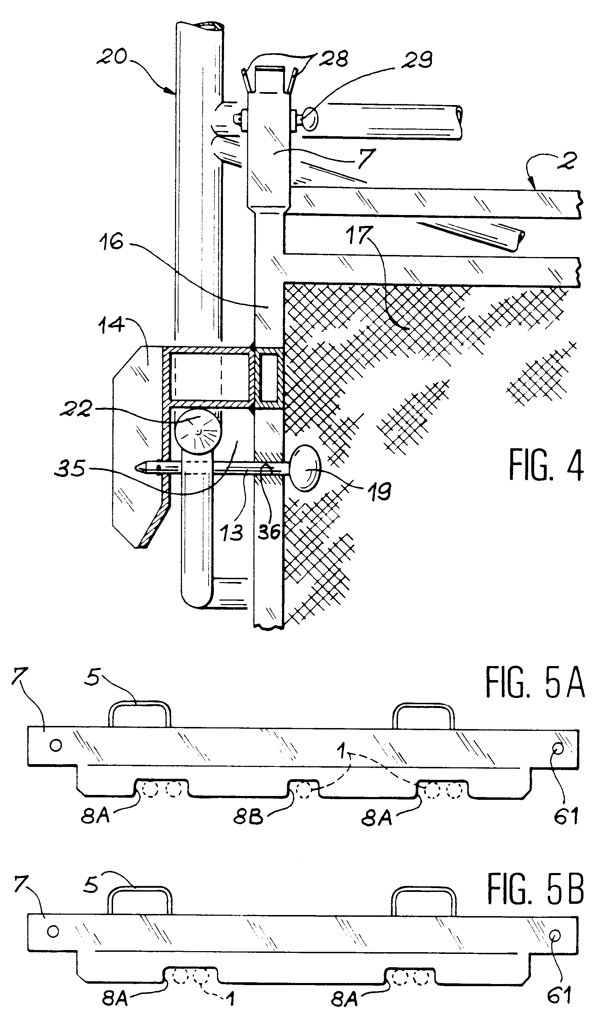

A l'extérieur des parois latérales d'extrémité 16 se trouvent les moyens de fixation 14 à l'élément porteur, en l'occurrence à la fourche 20. Ces moyens sont représentés plus en détail par la figure 4.

Sur cette dernière figure, sont représentés une paroi latérale d'extrémité 16 vue de profil, un crochet 14 constituant le moyen de fixation, une paroi latérale longitudinale 17, une extrémité de préhension 22 de la fourche 20, et une partie de cette dernière. On voit que le crochet 14 est fixé à la paroi latérale d'extrémité 16 de manière à constituer un logement 35 pour l'extrémité de préhension 22 de la fourche 20, l'accès à ce logement 35 se faisant par en dessous du crochet 14. L'introduction de l'extrémité de préhension 22 se fait horizontalement, cette position horizontale étant obtenue naturellement lorsque la fourche 20 est suspendue à l'hélicoptère par l'intermédiaire des élingues 25 d'un filin. La forme de la fourche 20 est donc déterminée dans ce but.

Pour éviter des mouvements inopinés de l'extrémité de préhension 22 par rapport aux crochets 14, c'est-à-dire de la fourche 20 par rapport à la nacelle 2, il est préférable de prévoir des moyens de verrouillage de la nacelle 2 sur la fourche 20. Comme le montre la figure 4, ces moyens de verrouillage sont avantageusement réalisés au moyen d'une goupille 13 bloquant en translation horizontale l'extrémité de préhension 22 par rapport aux crochets 14. On prévoit à cet effet, dans ce crochet 14, dans l'extrémité de préhension 22 et dans la paroi latérale d'extrémité 16, des trous 36 prévus à cet effet.

Comme le montre la figure 2, les trous dans l'extrémité de préhension 22 peuvent être simplement constitués par un espace vide dans la structure métallique 21 de la fourche 20. Cet endroit est symbolisé par un cercle en trait interrompu et repéré 63. De la même manière, un trou dans le crochet 14 est repéré 36, pour symboliser la position de cette goupille de verrouillage 13. Il est de toute manière indispensable que cette goupille 13 traverse l'extrémité de préhension 22 et au moins un des deux éléments parmi le crochet 14 et la paroi latérale d'extrémité 16. N'importe quel autre moyen de verrouillage de l'extrémité de préhension 22 sur la nacelle 2 peut être prévu.

La goupille 13 peut être facilement retirée de l'intérieur de la nacelle 2 par les opérateurs, au moyen d'une poignée de préhension 19. En effet, une fois que la nacelle 2 est positionnée et fixée sur les câbles aériens 1, les opérateurs peuvent enlever la goupille 13 et déverrouiller ainsi la fixation de la fourche 20 par rapport à la nacelle 2. La fourche 20 peut alors être évacuée par l'hélicoptère, par une translation horizontale complétée d'une translation vers le bas.

L'opération inverse peut avoir lieu lorsque toutes les opérations devant être effectuées sur les câbles aériens 1 sont terminées. La fourche 20 est alors rapprochée de la nacelle 2 par l'hélicoptère, de manière à ce que l'extrémité de préhension 22 passe en dessous des crochets 14. Les opérateurs peuvent alors verrouiller à l'aide de la goupille 13 la fourche 20 par rapport à la nacelle 2.

En revenant à la figure 2, un exemple de réalisation des moyens de fixation de la nacelle 2 par rapport aux câbles 1 consiste à prévoir une barre de fixation 7 au-dessus de chaque paroi latérale d'extrémité 16. Chaque barre de fixation 7 enferme, à l'aide de la paroi latérale d'extrémité correspondante 16, les câbles 1 dans la nacelle 2. De préférence, pour positionner les câbles aériens 1 par rapport à la nacelle 2, chaque barre de fixation 7 possède des encoches inférieures 8. La forme et la dimension des encoches correspondent à la forme et la position respective des câbles 1. Plus exactement, comme le montre la figure 5A, une première réalisation de la barre de fixation consiste à prévoir deux encoches latérales 8A dont la largeur correspond au moins à deux fois celle d'un câble aérien 1, de manière à ce que deux câbles aériens 1 puissent être logés dans chacune de ces encoches latérales 8A. Si le faisceau de câbles aériens possède un câble central, une encoche centrale 8B peut être prévue d'une largeur légèrement supérieure à celle du câble aérien 1 correspondant.

La deuxième réalisation illustrée par la figure 5B montre une deuxième réalisation de cette barre de fixation 7 avec uniquement deux encoches latérales 8A pouvant recevoir deux câbles aériens 1.

Il est ainsi possible de prévoir un jeu de couples de barres de fixation 7 ayant chacun des encoches dont les formes et les positions correspondent à la taille et à la position de câbles de différents faisceaux de câbles aériens. Chaque barre de fixation 7 possède néanmois dans ce cas des moyens de fixation standard pouvant s'adapter à une unique nacelle 2, en l'occurrence un trou 61. Ceci veut dire que, quelles que soient la forme et la position des encoches 8, 8A et 8B, la position du trou de fixation 61 des barres de fixation 7 doit être la même. En l'occurrence, dans l'exemple représenté, chaque barre de fixation 7 peut être verrouillée à l'extrémité supérieure des parois latérales d'extrémité 16. On peut prévoir à cet effet un système de goupilles verrouillables 29. Ce système de verrouillage est représenté de profil sur la figure 4. On peut distinguer une goupille de verrouillage 29 pénétrant dans la barre de guidage 7 et dans deux flasques 28 solidaires chacun de la paroi latérale d'extrémité 16.

Chaque barre de fixation 7 peut également être équipée de poignées 5 de manipulation.

Ce mode de fixation des câbles n'est qu'un exemple de réalisation, d'autres moyens pouvant être imaginés pour pouvoir adapter une unique nacelle 2 à plusieurs types de faisceaux de câbles aériens 1.

On conçoit ainsi qu'une nacelle de travail 2 puisse être utilisée pour une équipe de plusieurs opérateurs équipés de leur matériel. Différents accessoires peuvent ainsi être utilisés à bord de la nacelle pour entreposer le matériel ou pour fournir de l'énergie, par exemple un moteur à explosion.

### Fourche :

La partie droite de la figure 2 représente l'élément porteur de la nacelle 2, et plus exactement, une fourche 20. Cet élément a la forme d'une fourche 20 pour faciliter la préhension de la nacelle 2 et la dépose de cette dernière. Les mouvements relatifs de la fourche 20 par rapport à la nacelle 2 sont symbolisés par les flèches horizontales représentées à côté des extrémités de préhension 22. Ces dernières sont maintenues horizontalement grâce à la configuration de la structure métallique 21 de la fourche 20, dont la répartition du poids prévoit un équilibre, les extrémités de préhension 22 se trouvant horizontales.

La structure métallique 21 de la fourche 20 comprend de préférence des barres de détour 62 pour éviter que les câbles aériens ne pénètrent l'espace opérationnel de la nacelle 2 du côté de la fourche 20. De plus, elle comprend en particulier une barre supérieure 32 à laquelle sont fixés des moyens d'arrimage, sous la forme d'anneaux 12, aux élingues 25 du filin de l'hélicoptère.

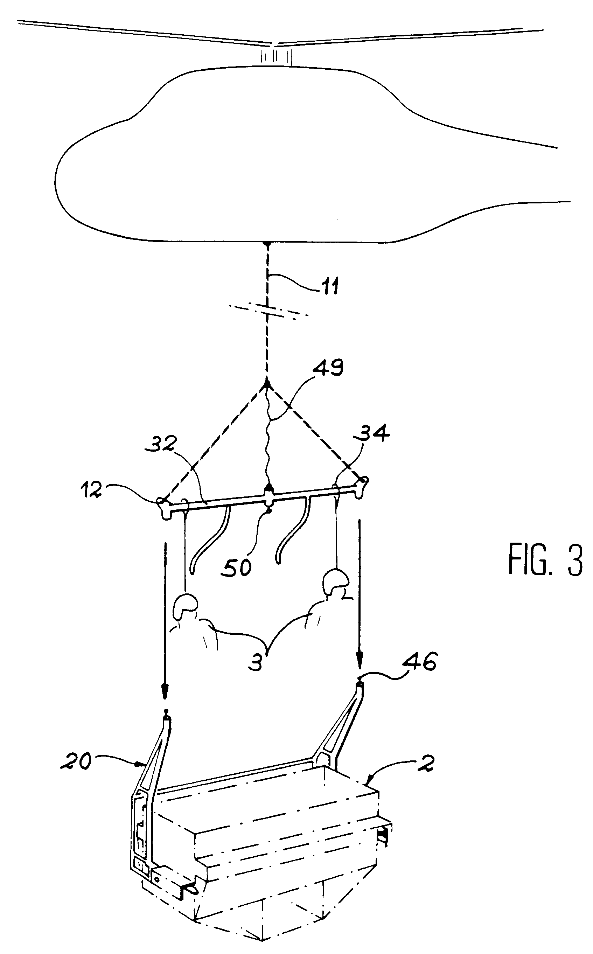

La fixation de cette barre supérieure 32 à la structure métallique 21 de la fourche 20 se fait de préférence au moyen de boulons pyrotechniques 46 placés à l'intérieur de la structure métallique 21. En effet, comme le montre la figure 3, ces boulons pyrotechniques 46 constituent un exemple de moyens permettant de larguer la structure métallique 21 de la fourche 20, et par là même, la nacelle 2 qu'elle supporte. Chaque boulon pyrotechniques 46 est relié par un cordeau pyrotechnique 49 à des moyens de commande pouvant se trouver, soit sur l'hélicoptère, soit sur la barre supérieure 32. Dans ce dernier cas, ils peuvent être commandés par les opérateurs 3 au moyen d'un interrupteur 50. Il est en effet obligatoire de prévoir la possibilité de larguer la majeure partie de la charge supportée par l'hélicoptère, au cas où celui-ci pourrait subir une panne ou une baisse de régime de la turbine de propulsion. Le poids relativement important constitué par la nacelle 2 peut être ainsi largué en quelques secondes.

Afin d'éviter aux opérateurs 3 de subir, dans cette situation particulière, le même sort que celui de la nacelle 2, des moyens d'arrimage de ces opérateurs 2 sont prévus également sur la barre supérieure 32. Ils sont constitués de préférence par des anneaux 34 auxquels les opérateurs 3 peuvent être reliés au moyen de câbles légers complétés d'un mousqueton, comme c'est le cas dans de nombreuses activités où un corps humain doit être assuré par rapport à un endroit fixe.

On comprend ainsi que l'invention permet à une équipe d'opérateurs d'intervenir sur un câble précis dans un faisceau de câbles aériens 1. Le concept de positionnement d'une cellule 2 à l'aide d'une fourche 20 permet de positionner une nacelle 2 sur des câbles aériens 1 placés dans la partie inférieure d'un faisceau, grâce à l'approche de la nacelle 2, de manière latérale et de bas en haut, relativement aux câbles 1 auxquels elle doit être fixée.

Pour assurer la stabilité de la nacelle, il est prévu qu'elle soit arrimée à au moins deux câbles. Néanmoins, on peut également envisager de la fixer à un seul câble aérien.

## Revendications

1. Procédé d'intervention sur au moins un câble aérien (1) au moyen d'une nacelle (2) à bord de laquelle peuvent être embarqués du matériel et des opérateurs (3) et comportant des moyens de fixation à au moins deux câbles (1), comprenant les phases suivantes :
- fixer la nacelle (2) à un élément porteur (20) en forme de fourche, de manière à pouvoir saisir la nacelle (2) sur le côté et légèrement par en dessous ;
- suspendre l'élément porteur (20) à un hélicoptère ;
- héliporter l'ensemble de l'élément porteur (20) et de la nacelle (2) pour positionner la nacelle (2) sur au moins deux câbles aériens (1) ;
- fixer la nacelle (2) sur au moins un desdits câbles aériens (1) ;
- détacher et retirer l'élément porteur (20) de la nacelle (2).

2. Procédé d'intervention selon la revendication 1, caractérisé en ce qu'il comprend les phases supplémentaires suivantes pour enlever la nacelle (2) placée sur les câbles aériens (1) :
- héliporter un élément porteur (20) en forme de fourche ;
- positionner l'élément porteur (20) près de la nacelle (2) à côté d'elle ;
- fixer la nacelle (2) à l'élément porteur (20) ;
- détacher la nacelle (2) des câbles aériens (1) auxquels elle est fixée ;
- dégager la nacelle (2) des câbles aériens (1) ;
- ramener au sol l'ensemble de la nacelle (2) et de l'élément porteur (20).

3. Nacelle héliportée (2) constituée d'une structure métallique (10) à l'intérieur de laquelle peuvent être embarqués des opérateurs (3) et du matériel et comprenant :
- des moyens de fixation à au moins un câble aérien (1) pour pouvoir fixer la nacelle (2) à ce câble aérien (1),
caractérisée en ce qu'elle comprend deux parois latérales d'extrémité (16) à l'extérieur desquelles sont placés les moyens de fixation à un élément porteur (20) en forme de fourche qui peut être suspendu à un hélicoptère, ces moyens de fixation à l'élément porteur permettant de recevoir chacun une extrémité de préhension (22) de l'élément porteur (20) en forme de fourche.

4. Nacelle selon la revendication 9, caractérisée en ce que les moyens de fixation à l'élément porteur (20) sont constitués de chaque côté d'un crochet (14) orienté vers le bas, et en dessous duquel peut pénétrer une extrémité de préhension (22) de l'élément porteur (20) en forme de fourche.

5. Nacelle selon la revendication 4, caractérisée en ce qu'elle comprend des moyens de verrouillage des extrémités de préhension (22) dans des crochets (14).

6. Nacelle selon la revendication 5, caractérisée en ce que les moyens de verrouillage comprennent une goupille (13) traversant l'extrémité de préhension (22) et au moins le crochet (14) ou la paroi latérale d'extrémité (16) correspondante.

7. Nacelle selon l'une quelconque des revendications 3 à 6, caractérisée en ce que les moyens de fixation aux câbles aériens (1) sont constitués à chaque extrémité de la nacelle (2) d'une barre de fixation (7) comportant des encoches (8) et dont la forme et la position correspondent avec la forme et la position des câbles aériens (1) auxquels la nacelle (2) doit être fixée, et des moyens de verrouillage de ces barres de fixation (7) sur les parois latérales d'extrémité (16), les encoches étant orientées vers le bas.

8. Fourche héliportée (20) comprennent :
- des moyens d'arrimage (12) aux élingues (25) d'un filin (11) d'un hélicoptère ;
- au moins deux extrémités de préhension (22) s'étendant horizontalement et latéralement lorsque la fourche (20) est suspendue à l'hélicoptère, afin de pouvoir pénétrer dans des moyens de fixation correspondants (14) d'un objet à saisir (2) et à héliporter.

9. Fourche selon la revendication 8, caractérisée en ce qu'elle comprend des trous (26) pratiqués dans les extrémités de préhension (22) pour recevoir une goupille (13) de verrouillage sur l'objet à saisir (2).

10. Fourche selon la revendication 8 ou 9, caractérisée en ce qu'elle est constituée d'une structure métallique (21) reliée à une barre supérieure (32) par plusieurs boulons pyrotechniques (46) reliés par des cordeaux pyrotechniques (49) à des moyens de commande (50) destinés à être actionnés à partir de l'hélicoptère ou par les opérateurs (3), pour larguer la structure métallique (21) et le matériel embarqué en cas de force majeure, et comprenant des moyens d'arrimage (34) des opérateurs (3) à la barre supérieure (32).

11. Fourche selon la revendication 10, caractérisée en ce qu'elle comprend des trous (26) pratiqués dans les extrémités de préhension (22) pour recevoir une goupille (13) de verrouillage sur l'objet à saisir (2).

12. Fourche selon la revendication 10 ou 11, caractérisée en ce qu'elle est constituée d'une structure métallique (21) reliée à une barre supérieure (32) par plusieurs boulons pyrotechniques (46) reliés par des cordeaux pyrotechniques (49) à des moyens de commande (50) destinés à être actionnés à partir de l'hélicoptère ou par les opérateurs (3), pour larguer la structure métallique (21) et le matériel embarqué en cas de force majeure, et comprenant des moyens d'arrimage (34) des opérateurs (3) à la barre supérieure (32).

## Patentansprüche

1. Eingriffsverfahren an mindestens einer Freileitung (1) mittels einer Gondel (2), die Material und Bedienungspersonal (3) aufnehmen kann und eine Einrichtung zur Befestigung an mindestens zwei Leitungen (1) besitzt, bestehend aus den folgenden Schritten:
- Fixieren der Gondel (2) an einem Trageelement (20) in Form einer Gabel, so daß die Gondel (2) von der Seite und leicht von unten ergriffen werden kann;
- Aufhängen des Trageelements (20) an einem Helikopter;
- Befördern der aus dem Trageelement (20) und der Gondel (2) bestehenden Einheit per Helikopter, um die Gondel (2) auf mindestens zwei Freileitungen (1) zu positionieren;
- Fixieren der Gondel (2) auf mindestens einer der genannten Freileitungen (1);
- Lösen und Zurückziehen des Trageelements (20) von der Gondel (2).

2. Eingriffsverfahren gemäß Anspruch 1,
**dadurch gekennzeichnet**,
daß es die zusätzlichen folgenden Schritte zum Entfernen der Gondel (2), die auf den Freileitungen (1) plaziert ist, umfaßt:
- Beförderung eines gabelförmigen Trageelements (20) per Helikopter;
- Positionieren des Trageelements (20) in die Nähe der Gondel (2) seitlich von ihr;
- Fixieren der Gondel (2) an dem Trageelement (20);
- Lösen der Gondel (2) von den Freileitungen (1), an die es fixiert ist;
- Freimachen der Gondel (2) von den Freileitungen (1);
- Zurückbringen der aus der Gondel (2) und dem Trageelement (20) bestehenden Einheit auf den Boden.

3. Helikopterbeförderte Gondel (2) bestehend aus einer metallischen Struktur (10), in deren Inneren Bedienungspersonal (3) und Material aufgenommen werden können, und die umfaßt:
- Einrichtungen zur Befestigung an mindestens einer Freileitung (1), um die Gondel (2) an dieser Freileitung (1) befestigen zu können,
**dadurch gekennzeichnet**,
daß sie zwei Seitenendwände (16) umfaßt, an deren Äußerem die Einrichtungen zur Befestigung an einem gabelförmigen Trageelement (20), das an einem Helikopter aufgehängt werden kann, angeordnet sind, wobei es diese Einrichtungen zur Befestigung am Trageelement gestatten, daß jede ein Greifende (22) des gabelförmigen Trageelements (20) aufnimmt.

4. Gondel gemäß Anspruch 9,
**dadurch gekennzeichnet**,
daß die Einrichtungen zur Befestigung an den Trageelementen (20) durch einen Haken (14) an jeder Seite gebildet werden, der nach unten orientiert ist und unter den ein Greifende (22) des gabelförmigen Trageelements (20) durchführen kann.

5. Gondel gemäß Anspruch 4,
**dadurch gekennzeichnet,**
daß sie eine Einrichtung zur Verriegelung der Greifenden (22) in den Haken (14) aufweist.

6. Gondel gemäß Anspruch 5,
**dadurch gekennzeichnet**,
daß die Verriegelungseinrichtung einen Stift (13) umfaßt, der das Greifende (22) und mindestens den Haken (14) oder die entsprechende Seitenendwand (16) durchdringt.

7. Gondel gemäß einem der voranstehenden Ansprüche 3 bis 6,
**dadurch gekennzeichnet**,
daß die Einrichtung zur Befestigung an den Freileitungen (1) an jedem Ende der Gondel (2) aus einem Befestigungsbalken (7) bestehen, der Kerben (8) besitzt und dessen Form und Position mit der Form und der Position der Freileitungen (1), an denen die Gondel (2) fixiert werden soll, übereinstimmt, und aus Einrichtungen zur Verriegelung dieser Befestigungsbalken (7) mit den Seitenendwänden (16), wobei die Kerben nach unten orientiert sind.

8. Helikopterbeförderte Gabel (20), bestehend aus:
- Einrichtung (12) zur Kopplung an Schlingen (25) eines Taus (11) eines Helikopters;
- mindestens zwei Greifenden (22), die sich horizontal und seitlich erstrecken, wenn die Gabel (20) an dem Helikopter aufgehängt ist, um in die entsprechenden Befestigungseinrichtungen (14) eines zu ergreifenden und per Helikopter zu befördernden Objekts (2) eindringen zu können.

9. Gabel gemäß Anspruch 8,
**dadurch gekennzeichnet**,
daß es Löcher (26) umfaßt, die in den Greifenden (22) zur Aufnahme eines Stifts (13) zur Verriegelung des zu ergreifenden Objekts (2) ausgebildet sind.

10. Gabel gemäß Anspruch 8 oder 9,
**dadurch gekennzeichnet**,
daß sie aus einer metallischen Struktur (21) besteht, die mit einem oberen Balken (32) durch mehrere pyrotechnische Bolzen (46) verbunden ist, welche durch Zündschnüre (49) mit einer Befehlseinrichtung (50) verbunden sind, die zur Betätigung vom Helikopter aus oder durch das Bedienungspersonal (3) bestimmt sind, um die metallische Struktur (21) und das geladene Material im Fall größerer Kraft abzuwerfen, und umfassend eine Einrichtung (34) zur Kopplung des Bedienungspersonals (3) an den oberen Balken (32).

11. Gabel gemäß Anspruch 10,
**dadurch gekennzeichnet**,
daß sie Löcher (26) umfaßt, die in den Greifenden (22) zur Aufnahme eines Stifts (13) zur Verriegelung des zu ergreifenden Objekts (2) ausgebildet sind.

12. Gabel gemäß Anspruch 10 oder 11,
**dadurch gekennzeichnet**,
daß sie aus einer metallischen Struktur (21) besteht, die mit einem oberen Balken (32) durch mehrere pyrotechnische Bolzen (46) verbunden ist, welche durch Zündschnüre (49) mit einer Befehlseinrichtung (50) verbunden sind, die zur Betätigung vom Helikopter aus oder durch das Bedienungspersonal (3) bestimmt ist, um die metallische Struktur (21) und das geladene Material im Fall größerer Kraft abzuwerfen, und umfassend eine Einrichtung (34) zur Kopplung des Bedienungspersonals (3) an den oberen Balken (32).

## Claims

1. Process for intervention on at least one overhead cable (1) by means of a nacelle (2) on board which are located equipment and operators (3) and having means for fixing to at least two cables (1), comprising the phases of fixing the nacelle (2) to a fork-shaped carrying element (20), so as to be able to seize the nacelle (2) by the side and slightly from below, suspending the carrying element (20) on a helicopter, carrying by helicopter the assembly constituted by the carrying element (20) and the nacelle (2) for positioning the nacelle (2) on at least two overhead cables (1), fixing the nacelle (2) to at least one of the said overhead cables (1), detaching and removing the carrying element (20) from the nacelle (2).

2. Intervention process according to claim 1, characterized in that it comprises the following supplementary phases for removing the nacelle (2) placed on overhead cables (1), namely carrying by helicopter a fork-shaped carrying element (20), positioning the latter close to the nacelle (2) alongside it, fixing the nacelle (2) to the carrying element (20), detaching the nacelle (2) from the overhead cables (1) to which it is fixed, removing the nacelle (2) from the overhead cables (1) and bringing to the ground the nacelle (2) and the carrying element (20).

3. Helicopter-carried nacelle (2), constituted by a metal structure (10) within which can be carried operators (3) and equipment, the nacelle (2) having means for fixing to at least one overhead cable (1) in order to be able to fix the nacelle to said overhead cable (1), characterized in that it has two end side walls (16) on the outside of which are placed the means for fixing to a fork-shaped carrying element (20) which can be suspended on a helicopter, said means for fixing to the carrying element (20) make it possible to in each case receive one gripping end (22)of the fork-shaped carrying element.

4. Nacelle according to claim 5, characterized in that the fixing means for the carrying element (20) are constituted on each side by a downwardly oriented hook (14) and below which can penetrate a gripping end (22) of the fork-shaped carrying element (20).

5. Nacelle according to claim 4, characterized in that it comprises means for locking the gripping ends (22) in hooks (14).

6. Nacelle according to claim 5, characterized in that the locking means comprise a pin (13) traversing the gripping end (22) and at least the hook (14) or corresponding lateral end wall (16).

7. Nacelle according to any one of the claims 3 to 6, characterized in that the fixing means to the overhead cables (1) are constituted at each end of the nacelle (2) by a fixing bar (7) having notches (8) and whose shape and position correspond to the shape and position of the overhead cables (1) to which the nacelle (2) has to be fixed, and means for locking said fixing bars (7) to the end side walls (16), the notches being oriented downwards.

8. Helicopter-carried fork (20) comprising securing means (12) to the slings (25) of a rope (11) of a helicopter, at least two gripping ends (22) extending horizontally when the fork (20) is suspended on the helicopter, so as to be able to penetrate corresponding fixing means (40) of an object (2) to be seized and carried by helicopter.

9. Fork according to claim 8, characterized in that it comprises holes (26) made in the gripping end (22) for receiving a locking pin (13) on the object (2) to be seized.

10. Fork according to claims 8 or 9, characterized in that it is constituted by a metal structure (21) connected to an upper bar (32) by several pyrotechnic bolts (46) connected by pyrotechnic cords (49) to control means (50) to be operated from the helicopter or by operators (3), so as to jettison the metal structure (21) and on-board equipment in the case of force majeure and comprising means (34) for securing the operators (3) to the upper bar (32).

11. Fork according to claim 10, characterized in that it comprises holes (26) made in the gripping end (22) for receiving a locking pin (13) on the object (2) to be seized.

12. Fork according to claims 10 or 11, characterized in that it is constituted by a metal structure (21) connected to an upper bar (32) by several pyrotechnic bolts (46) connected by pyrotechnic cords (49) to control means (50) to be operated from the helicopter or by operators (3), so as to jettison the metal structure (21) and on-board equipment in the case of force majeure and comprising means (34) for securing the operators (3) to the upper bar (32).
